**Europäisches Patentamt**

**European Patent Office**

**Office européen des brevets**

(11) Veröffentlichungsnummer: **0 211 281**
**B1**

(12) **EUROPÄISCHE PATENTSCHRIFT**

(45) Veröffentlichungstag der Patentschrift:
**04.10.89**

(21) Anmeldenummer: **86109679.0**

(22) Anmeldetag: **15.07.86**

(51) Int. Cl.⁴: **F 16 F 9/02**

(54) Gasfeder.

(30) Priorität: **03.08.85 DE 3527997**

(43) Veröffentlichungstag der Anmeldung:
**25.02.87 Patentblatt 87/9**

(45) Bekanntmachung des Hinweises auf die Patenterteilung:
**04.10.89 Patentblatt 89/40**

(84) Benannte Vertragsstaaten:
**AT BE CH DE FR GB IT LI NL SE**

(56) Entgegenhaltungen:
**DE-A-2 421 007**
**DE-C-2 622 879**

(73) Patentinhaber: **Fritz Bauer + Söhne oHG,
Industriestrasse 12- 14, D-8503 Altdorf b.
Nürnberg (DE)**

(72) Erfinder: **Bauer, Hans- Peter, Zeigelhütte 9, D-8503
Altdorf (DE)**
Erfinder: **Bauer, Hans Jürgen, Am Eichenhain 8,
D-8503 Altdorf (DE)**

(74) Vertreter: **Rau, Manfred, Dr. Dipl.- Ing., Rau &
Schneck, Patentanwälte Königstrasse 2, D-8500
Nürnberg 1 (DE)**

## Beschreibung

Die Erfindung betrifft eine Gasfeder nach dem Oberbegriff des Anspruches 1.

Gasfedern der gattungsgemäßen Art weisen zahlreiche unterschiedliche Dämpfungseinrichtungen auf, mit denen unterschiedliche Dämpfungscharakteristiken und damit unterschiedliche Ein- bzw. Ausschubgeschwindigkeiten erreicht werden. Bei Heckklappen oder Motorhauben von Kraftfahrzeugen wurden zusätzliche mechanische Klemmeinrichtungen oder hydropneumatische Verriegelungseinrichtungen vorgesehen, um sicherzustellen, daß in ausgefahrener Stellung der Gasfeder, d.h. bei angehobenem Kofferraumdeckel, bzw. angehobener Heckklappe, bzw. angehobener Motorraumhaube, bei einem Absinken des Druckes der Gasfeder der Deckel bzw. die Klappe nicht unbeabsichtigt absinken konnte.

Aus der DE-C-2 622 879 ist eine Gasfeder der gattungsgemäßen Art bekannt, deren Kolben mit einem Gleit- und Dichtring versehen ist, der als Führungselement für die Kolbenstange wirkt. Der Kolben ist mit einem axialen Durchlaß versehen, der durch axiale Verschiebungen des Kolbens relativ zur Kolbenstange beim Ausfahren der Kolbenstange aus dem Gehäuse stärker als beim Einfahren derselben in das Gehäuse verschlossen wird, so daß eine asymmetrische Dämpfung erreicht wird. Ein Einsatz dieser bekannten Gasfeder ist dort, wo einerseits die Ausschubkraft der Gasfeder als zusätzliche Hilfe benötigt wird, wie beispielsweise bei Motorhauben und Kofferraumdeckeln von Autos, zum Bewegen des Oberteils von Solarien und dgl., wo andererseits aber gerade in jeder Zwischenstellung oder zumindest in zahlreichen Zwischenstellungen die Haube, der Deckel oder das Oberteil des Solariums in der Ruhelage verbleiben soll, nicht möglich. Außerdem tritt die Veränderung der Dämpfung bei der bekannten Gasfeder immer erst dann ein, wenn die Kolbenstange bereits um eine gewisse Strecke aus ihrer Ruhelage herausbewegt ist, bis nämlich der Kolben sich relativ zur Kolbenstange in seine der jeweiligen Bewegungsrichtung entsprechende Lage bewegt hat.

Für Gegenstände, die in jeder Höhenlage sich in einer Ruhelage befinden sollen, werden Gasfedern, und zwar auch gedämpfte Gasfedern, üblicherweise nicht eingesetzt, da das Austarieren außerordentlich schwierig ist. Hier werden bevorzugt sogenannte Ölstützen eingesetzt, die aufwendig in ihrem Aufbau sind und insbesondere absolut dichte Ventilscheiben benötigen (DE-A-2 653 552 und DE-A-2 555 062).

Aus dem DE-U-8 502 121 ist es in diesem Zusammenhang bereits bekannt geworden, bei einer Gasfeder eine mechanische Klemmeinrichtung vorzusehen, die durch eine willkürlich stufenlos einstellbare Reibungsbremse gebildet ist. Hierzu ist ein stufenlos in der Anpreßkraft veränderbarer, elastisch auf die Kolbenstange einwirkender Reibkörper vorgesehen. Eine reproduzierbare Dämpfung ist mit einer solchen Klemmeinrichtung wegen der relativ kleinen Oberfläche der Kolbenstange nur schwer erreichbar. Außerdem besteht die Gefahr, daß die Oberfläche der Kolbenstange verletzt wird, was zu einem Undichtwerden der Gasfeder führen würde.

Aus der DE-A-2 421 007 ist eine Gasfeder bekannt, die aus einem im wesentlichen zylindrischen Gehäuse und einem ebenfalls zylindrischen Innenrohr besteht, wobei dieses Innenrohr einerseits die Funktion einer Kolbenstange bzw. eines Tauchkolbens und andererseits die Funktion eines Gehäuses aufweist. Wie im einzelnen in der Druckschrift ausgeführt wird, ist dieses Innenrohr nur an seinem im Gehäuse befindlichen Ende gegenüber dessen Innenwand abgedichtet. Am Ende des Gehäuses ist es nicht mehr abgedichtet. Am im Gehäuse befindlichen Ende des Innenrohres ist eine pneumatische Dämpfungseinrichtung angebracht, mittels deren das beim Einfahren des Innenrohres bzw. bei dessen Ausfahren das durch diese Dämpfungseinrichtung in bzw. aus dem Innenraum des Innenrohres strömende Gas einer Drosselung unterzogen wird. Aufgrund der Ausgestaltung des Tauchkolbens als Rohr kann nur etwa 50 % des die Gesamtgasfüllung bildenden Gases bei einer vollständigen Ein- bzw. Ausschubbewegung des Innenrohres durch diese pneumatische Dämpfungseinrichtung strömen. Die andere Hälfte des Gases verbleibt immer im Innenrohr. Aufgrund dieser Tatsache und aufgrund der weiteren Tatsache, daß bedingt durch die Art der Konstruktion dieser bekannten Gasfeder der Gasdruck in dieser zur Erzeugung einer bestimmten Ausschubkraft niedriger ist als bei "üblichen" Gasfedern, wie sie beispielsweise gattungsgemäß vorausgesetzt wurden, ist die pneumatische Bewegungsdämpfung sehr schwach. Zur Verstärkung dieser Bewegungsdämpfung ist am im Gehäuse befindlichen Ende des Innenrohres ein gegebenenfalls fettgetränkter Reibungs- bzw. Dämpfungsbelag, beispielsweise aus geschäumtem Polyurethan, also aus geschäumtem Kunststoff, angeordnet. Dieser Belag ist relativ zum Innenrohr axial unverschiebbar. Irgendein Hinweis darauf, daß die Reibungsdämpfung hier als eigenständige Haftreibung eingesetzt wird, die dazu dient, abzustützende Gegenstände in einer bestimmten Ruhelage zu halten, ist dieser Druckschrift nicht zu entnehmen. Vielmehr ist dort die Reibungsdämpfung - was wiederholt sei - nur vorgesehen, um die prinzipbedingt geringe pneumatische Dämpfung zu unterstützen. Aus diesem Grunde ist dort auf eine genau definierte Reibungsdämpfung auch nicht hingewiesen.

Der Erfindung liegt die Aufgabe zugrunde, eine Gasfeder der gattungsgemäßen Art so auszugestalten, daß sie einen bewgbaren Gegenstand, wie eine Heckklappe oder eine Motorhaube eines Kraftfahrzeuges oder ein Oberteil eines Solariums, für dessen Bewegung sie als Hubhilfe eingesetzt wird, zuverlässig in Zwischenstellungen hält.

Diese Aufgabe wird erfindungsgemäß durch die Merkmale im Kennzeichnungsteil des Anspruches 1 gelöst. Durch die Ausgestaltung des Reibungsbelages aus offenzelligem Schaumstoff und damit die Anordnung des Schmiermittels in der Reibfläche wird sichergestellt, daß eine genau definierte Reibung, also eine weitestgehend konstante Reibung, und zwar Haftreibung oder Gleitreibung, erreicht wird. Derartige radial leicht vorgespannte Reibungs-Dämpfungsbeläge führen also zu einer sehr genau definierten, stets reproduzierbaren Hysterese, die entsprechend dem Bedarf eingestellt werden kann. Die erfindungsgemäß ausgestatteten Gasfedern könne beispielsweise zum Heben und Senken der Oberteile von Sonnenbänken von Solarien und zum Halten diese Oberteile in Zwischenstellungen oder in ihrer Endlage eingesetzt werden. In solchen Zwischenstellungen ist keine Bewegung zwischen der Kolbenstange und dem die Haftreibung zur Gehäusewand vermittelnden Kolben möglich, so daß das abzustützende Teil tatsächlich zuverlässig und spielfrei in der zu fixierenden Zwischenstellung gehalten wird.

Wenn in einer bestimmten Einschubstellung der Kolbenstange relativ zum Gehäuse die Reibungs-Dämpfungskraft teilweise oder völlig aufgehoben werden soll, dann sind die zusätzlichen Maßnahmen nach Anspruch 2 oder 3 von großen Nutzen.

Anspruch 4 gibt die üblichen Reibungskräfte wieder, die zum Halten der angesprochenen Gegenstände in der Ruhelage erforderlich sind, wobei Anspruch 5 die hierbei üblichen Ausschubkräfte von Gasfedern wiedergibt.

Weitere Vorteile und Merkmale der Erfindung ergeben sich aus der Beschreibung von Ausführungsbeispielen anhand der Zeichnung. Es zeigt

Fig. 1   eine Gasfeder in Langsansicht, teilweise aufgebrochen,

Fig. 2   eine Teilausschnitt aus der Gasfeder in stark vergrößertem Maßstab mit dem erfindungsgemäßen Reibungs-Dämpfungsbelag im Bereich der Kolben-Gruppe,

Fig. 3   eine abgewandelte Ausführungsform nach der Erfindung, ebenfalls in stark vergrößertem Maßstab und

Fig. 4   eine weitere abgewandelte Ausführungsform nach der Erfindung.

Die in der Zeichnung dargestellte Gasfeder weist ein etwa zylindrisches Gehäuse 1 auf, an dessen einem Ende ein Anschlußelement 2, beispielsweise ein sogenanntes Auge oder ein kugelsegmentförmiges Glied, angebracht ist. An diesem Ende ist das Gehäuse 1 also dicht verschlossen. Aus dem anderen Ende des Gehäuses 1 ist eine koaxial zur Mittel-Längs-Achse 3 des Gehäuses 1 angeordnete Kolbenstange 4 herausgeführt, an deren freiem Ende ebenfalls ein Anschlußelement 5 angebracht ist, das ebenfalls als Auge oder als kugelsegmentförmiges Glied ausgebildet sein kann. Die Kolbenstange 4 ist in üblicher Weise abgedichtet aus dem Gehäuse 1 herausgeführt. Das Gehäuse 1 weist eine zylindrische Innenwand 6 auf.

Am inneren Ende der Kolbenstange 4 ist eine Kolben-Gruppe 7 angebracht, mittels derer der Innenraum des Gehäuses 1 in zwei Teil-Gehäuseräume 8 und 9 getrennt wird, wovon der erstgenannte Teil-Gehäuseraum 8 von der Kolbenstange 4 durchsetzt ist. Die beiden Teil-Gehäuseräume 8, 9 sind über die Kolben-Gruppe 7 miteinander verbunden. Sie sind mit Druckgas gefüllt. Außerdem ist eine kleine Menge Öl zu Schmierzwecken vorhanden.

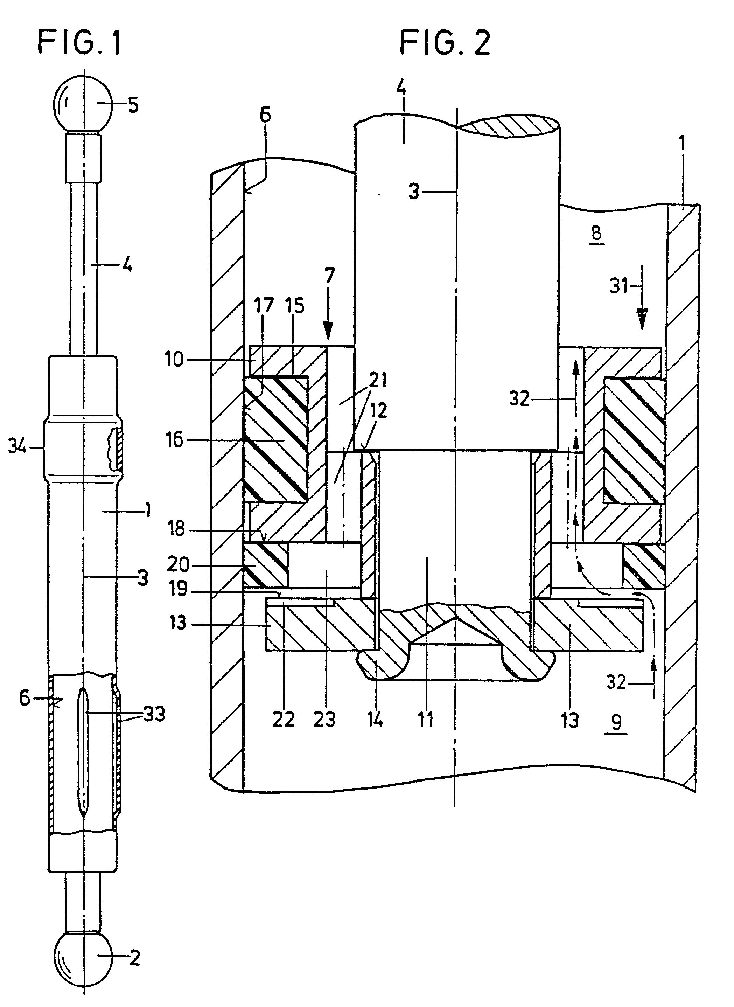

Bei der Ausführungsform nach Fig. 2 weist die Kolben-Gruppe 7 einen Kolben 10 auf, der auf einem zapfenartig verjüngten Abschnitt 11 der Kolbenstange 4 angeordnet ist und axial in einer Richtung durch einen Ringbund 12 zwischen dem Abschnitt 11 und der Kolbenstange 4 festgelegt ist. Auf der anderen Seite des der Führung an der Innenwand 6 dienenden Kolbens 10 ist auf den Abschnitt 11 eine als Dämpfungsscheibe dienende Ringscheibe 13 aufgeschoben. Das freie Ende des Abschnittes 11 ist vernietet, so daß ein Ringwulst 14 gegen die Ringscheibe 13 anliegt und somit den Kolben 10 samt Ringscheibe 13 in der anderen, zum freien Ende der Kolbenstange 4 hin liegenden Richtung festlegt. Der Kolben 10 und die Ringscheibe 13 sind radial weitgehend spielfrei auf dem Abschnitt 11 der Kolbenstange 4 angeordnet. Der weitgehend zylindrische Kolben 10 weist einen Außendurchmesser auf, der nur um ein oder zwei Zehntel Millimeter geringer ist als der Innendurchmesser des Gehäuses 1. In einer ringzylindrischen Nut 15 des Kolbens 10 ist ein ringförmiger Reibungs-Dämpfungsbelag 16 angeordnet, der kreisringförmig geschlossen sein kann, oder aber auch als flacher, quaderförmiger Streifen in die Nut 15 eingelegt werden kann. Dieser Reibungs-Dämpfungsbelag besteht aus geschäumtem Polyurethan. Zumindest im Bereich der gegen die Innenwand 6 anliegenden Reibfläche 17 ist dieser Polyurethan-Schaumstoff offenzellig bzw. weist er geöffnete Zellen auf, so daß in diesen offenen bzw. geöffneten Zellen ein geringer Teil des im Gehäuse 1 befindlichen Schmieröls aufgenommen werden kann.

Der Kolben 10 weist zumindest in seinem radial außen gelegenen Bereich eine sich radial zur Mittel-Längs-Achse 3 erstreckende Anlagefläche 18 auf, die der zugewandten Stirnseite 19 der Ringscheibe 13 gegenüberliegt. In dem zwischen dieser Anlagefläche 18 und der Stirnseite 19 befindlichen Raum ist ein gegen die Innenwand 6 des Gehäuses 1 dichtend anliegender Dichtungsring 20 angeordnet, dessen Erstreckung in Richtung der Mittel-Längs-Achse 3 kleiner ist als der axiale Abstand der Anlagefläche 18 und der Stirnseite 19. Radial innerhalb des Dichtungsringes 20 sind im Kolben 10 sich parallel zur Achse 3 durch diesen hindurch erstreckende Kanäle 21 ausgebildet. In der Stirnseite 19 der Ringscheibe 13 sind Radialkanäle 22 ausgebildet, die sich auch bis in den radial innerhalb des Dichtungsrings 20 liegenden Raum 23 zwischen der Anlagefläche 18 der Stirnseite 19 erstrecken, aus dem auch die Axial-Kanäle 21 ausmünden.

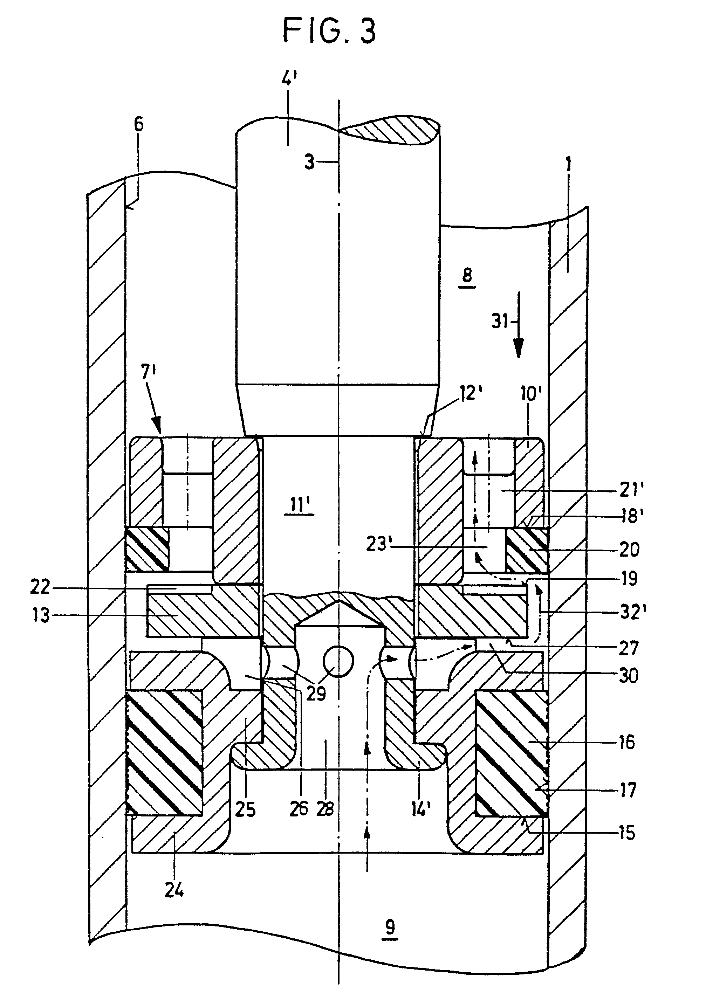

Soweit bei der Ausführungsform nach Fig. 3 funktionell gleiche und lediglich konstruktiv andere Teile vorgesehen sind, werden dieselben Bezugsziffern wie bei der Beschreibung von Fig. 2 verwendet, die lediglich mit einem hochgesetzten ' versehen sind. Identische Teile bekommen dieselben Bezugsziffern.

Bei der Ausführungsform nach Fig. 3 ist der Kolben 10' axial kürzer ausgebildet als bei der Ausführungsform nach Fig. 2, da er keine Nut mit einem Reibungs-Dämpfungsbelag aufweist. Er ist nur so lang ausgebildet, daß er - soweit notwendig - die radiale Führung übernehmen kann.

Der Abschnitt 11' ist in Richtung der Mittel-Längs-Achse zum freien Ende der Kolbenstange 4' hin verlängert. Auf dieser Seite der Ringscheibe 13 ist ein Träger 24 für einen Reibungs-Dämpfungsbelag 16 angeordnet, der also auch eine Nut 15 aufweist.

Dieser Träger 24 ist mit einem Ringsteg 25 auf dem Abschnitt 11' angeordnet und mit einigen sich axial erstreckenden Rippen 26 gegen die dem Kolben 10' abgewandte Außenfläche 27 der Ringscheibe 13 abgestützt. In den Abschnitt 11' ist ein sich mindestens bis in den Bereich der Rippen 26 erstreckendes, zentrisch zur Achse 3 verlaufendes Sackloch 28 gebohrt, aus dem mindestens eine Durchlaßbohrung 29 in den Raum 30 zwischen dem Träger 24 und der Ringscheibe 13 einmündet. Der Abschnitt 11' ist im Bereich seines freien äußeren Randes nach außen gegen den Ringsteg 25 umgebördelt, so daß der Träger 24 mit seinen Rippen 26 dicht gegen die Außenfläche 27 der Ringscheibe 13 anliegt und diese wiederum zusammen mit dem Kolben 10' gegen den Ringbund 12' drückt, wodurch zum einen die Kolben-Gruppe 7' und zum anderen der Träger 24 mit dem Reibungs-Dämpfungsbelag 16 axial unverschiebbar mit der Kolbenstange 4' verbunden sind. Während bei der Ausführungsform nach Fig. 2 der Reibungskolben in den Kolben 10 integriert ist, ist bei der Ausführungsform nach Fig. 3 also ein gesonderter Reibungskolben vorgesehen.

Bei der Ausgestaltung nach den Figuren 2 und 3 wird durch die Ausgestaltung der Kolben-Gruppe 7 bzw. 7' eine asymmetrische pneumatische Dämpfung erreicht. Wenn die Kolbenstange 4 bzw. 4' entsprechend dem Richtungspfeil 31 in das Gehäuse 1 hineingeschoben wird, dann liegt der Dichtungsring 20 - wie in den Figuren 2 und 3 dargestellt - gegen die Anlagefläche 18 des Kolbens 10 bzw. 10' an, so daß Gas entsprechend den Strömungs-Richtungspfeilen 32 bzw. 32' zwischen der Stirnseite 19 der Ringscheibe 13 und dem Dichtungsring 20 in den Raum 23 und von dort durch die Axial-Kanäle 21 bzw. 21' in den Teil-Gehäuseraum 8 strömen kann.

Bei der Ausgestaltung nach Fig. 3 strömt das Gas zuvor aus dem Teil-Gehäuseraum 9 durch das Sackloch 28 und die Durchlaßbohrungen 29 und den Raum 30.

Wenn die Kolbenstange 4 sich unter dem Druck des im Gehäuse 1 befindlichen Gases aus dem Gehäuse heraus, also entgegen dem Richtungspfeil 31 bewegt, dann liegt der Dichtungsring 20 gegen die Stirnseite 19 der Ringscheibe 13 an, so daß das Gas nur noch durch die Radial-Kanäle 22 vom Teil-Gehäuseraum 8 in den Teil-Gehäuseraum 9 strömen kann. Aufgrund der starken Querschnittsreduktion in diesen Radial-Kanälen 22 findet eine beträchtliche Drosselung des Gases statt. Bei beiden Ausführungsformen ist die Ausfahrbewegung der Kolbenstange 4 bzw. 4' also pneumatisch deutlich stärker gedämpft als deren Einschubbewegung.

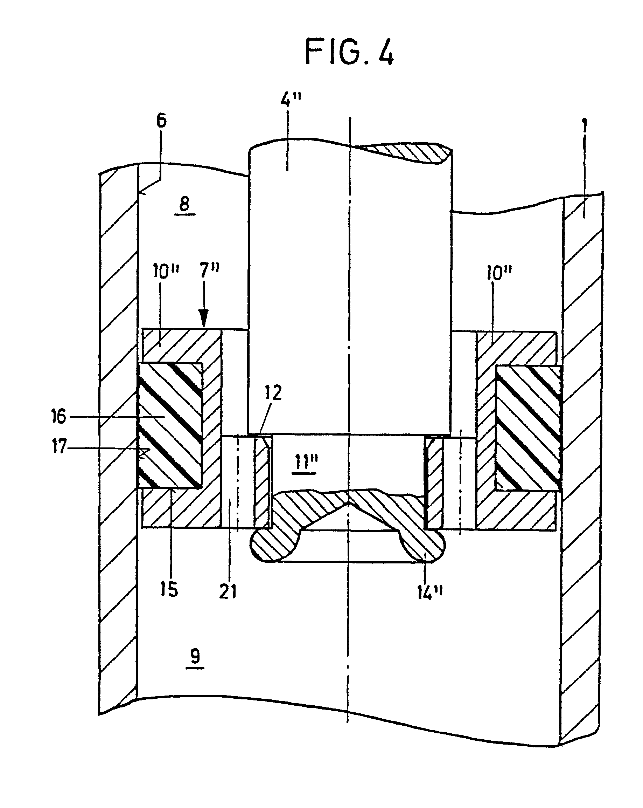

Soweit in Fig. 4 mit Fig. 2 identische Teile verwendet sind, werden identische Bezugsziffern verwendet. Soweit die Teile funktionell gleich, aber konstruktiv unterschiedlich sind, werden dieselben Bezugsziffern mit einem hochgesetzten " bezeichnet.

Bei der Ausführungsform nach Fig. 4 ist an der Kolbenstange 4" ein verkürzter zylindrischer Abschnitt 11" ausgebildet. Dieser Abschnitt ist um den Kolben 10" unter Bildung einer Ringwulst 14" gebördelt. Der Kolben 10" weist lediglich axiale Kanäle 21 auf, durch die das Gas vom Teil-Gehäuseraum 8 praktisch dämpfungsfrei in den Teil-Gehäuseraum 9 und umgekehrt strömen kann. Es sind also keine Maßnahmen für eine pneumatische Dämpfung vorgesehen. Die Nut 15 mit dem Reibungs-Dämpfungsbelag 16 ist identisch wie bei der Ausführungsform nach Fig. 2.

Bei allen drei Ausgestaltungen treten bei Verschiebungen der Kolbenstange 4 bzw. 4' bzw. 4" Reibungskräfte zwischen der Reibfläche 17 des Reibungs-Dämpfungsbelages 16 und der Innenwand 6 des Gehäuses 1 auf, die von der Materialart des Dämpfungsbelages 16, seiner Dichte, der Größe seiner Reibfläche 17 und seiner radialen Vorspannung abhängen. Die radiale Vorspannung wird dadurch erreicht, daß der Reibungs-Dämpfungsbelag 16 vor dem Einsetzen in das Gehäuse 1 eine größere radiale Erstreckung hat, als dem Innendurchmesser des Gehäuses 1 entspricht.

Derartige, mit einer zusätzlichen Reibungs-Dämpfung versehene Gasfedern können besonders bevorzugt dort eingesetzt werden, wo einerseits die Ausschubkraft der Gasfeder als zusätzliche Hubhilfe benötigt wird, wie beispielsweise bei Motorhauben und Kofferraumdeckeln von Autos, zum Bewegen des Oberteils von Solarien u. dgl. Andererseits ist es gerade bei solchen Anwendungsfällen erwünscht, daß in jeder Zwischenstellung oder in zumindest zahlreichen Zwischenstellungen die Haube, der Deckel oder das Oberteil des Solariums in der Ruhelage verbleibt. Gerade hier ist die zusätzliche Reibungsdämpfung mit einem definierten bzw. definierbaren Wert der Reibungskraft besonders günstig. Bei den geschilderten Anwendungsfällen werden üblicherweise zusätzliche Dämpfungskräfte zwischen 30 und 120 N gefordert.

Diese sind bei den üblichen Gasfedern mit einer Ausschubkraft unter Normalbedingungen (20° C) von 400 bis 500 N leicht erreichbar.

Wenn die Reibungsdämpfung in irgendeinem Bereich des Gehäuses 1 reduziert oder ganz aufgehoben werden soll, dann ist dies durch eine Durchmessererweiterung der Innenwand 6 des Gehäuses 1 erreichbar. Eine solche Durchmessererweiterung kann dadurch erreicht werden, daß das Gehäuse 1 rundum einen vergrößerten Innendurchmesser erhält, wobei die Vergrößerung so groß ist, daß die Vorspannung des Materials des Reibungs-Dämpfungsbelages 16 aufgehoben wird. Wenn nur eine Reduktion der Reibungs-Dämpfungskraft erreicht werden soll, dann können beispielsweise sickenartige, parallel zur Mittel-Längs-Achse 3 verlaufende Vertiefungen 33 in die Innenwand 6 des Gehäuses 1 gedrückt werden, so daß eine partielle Durchmesservergrößerung erreicht wird. Eine sich über den ganzen Umfang des Gehäuses 1 erstreckende Durchmessererweiterung 34 ist ebenfalls in Fig. 1 dargestellt. Es sei ausdrücklich betont, daß solche Durchmessererweiterungen 33 und/oder 34 axial hintereinander angeordnet sein können, so daß die Reibungsdämpfung nur in relativ kurzen, dazwischen liegenden Bereichen erfolgt.

## Patentansprüche

1. Gasfeder, bestehend aus einem im wesentlichen zylindrischen, mit Druckgas gefüllten und an einem Ende dicht geschlossenen Gehäuse (1) und einer konzentrisch in diesem und abgedichtet aus dessen anderem Ende herausgeführten Kolbenstange (4, 4', 4''), die an ihrem im Gehäuse (1) befindlichen Ende mit einem Kolben (10, 10', 10'') versehen ist, der mittels eines axial zum Kolben unverschieblichen Rings (16) an der Innenwand (6) des Gehäuses (1) anliegt und der mit einer Einrichtung zur pneumatischen Dämpfung einer Relativbewegung zwischen Kolbenstange (4, 4', 4'') und Gehäuse (1) versehen ist, _dadurch gekennzeichnet, daß_ der Kolben (10, 10', 10'') axial unverschieblich mit der Kolbenstange (4, 4', 4'') verbunden ist und daß der Ring durch einen aus geschäumtem Kunststoff bestehenden Reibungs-Dämpfungsbelag gebildet ist, der zumindest an seiner an der Innenwand (6) anliegenden Reibfläche (17) offenzellig ausgebildet und mit Schmiermittel imprägniert ist.

2. Gasfeder nach Anspruch 1, _dadurch gekennzeichnet, daß_ die Innenwand (6) des Gehäuses (1) über einen Teil der Länge des Gehäuses (1) zumindest teilweise erweitert ausgebildet ist.

3. Gasfeder nach Anspruch 2, _dadurch gekennzeichnet, daß_ die Innenwand (6) des Gehäuses (1) sich über einen Teil der Länge des Gehäuses (1) erstreckende Vertiefungen (33) aufweist.

4. Gasfeder nach einem der Ansprüche 1 bis 3, _dadurch gekennzeichnet, daß_ zum Halten eines abzustützenden Gegenstandes in ein oder mehreren Ruhelagen zwischen dem Reibungs-Dämpfungsbelag (16) und der Innenwand (6) des Gehäuses (1) Reibungs-Dämpfungskräfte zwischen 30 und 120 N wirken.

5. Gasfeder nach einem der Ansprüche 1 bis 4, insbesondere nach Anspruch 4, _dadurch gekennzeichnet, daß_ die Gasfeder unter Normalbedingungen (20° Celsius) eine Ausschubkraft von 400 bis 500 N aufweist.

## Claims

1 . A gas spring, consisting of a substantially cylindrical housing (1) filled with compressed gas and tightly closed at one end and a piston rod (4, 4', 4'') disposed concentrically in the housing and extending out of it in a sealed manner at the other end of the housing, the piston rod being provided on its end located in the housing with a piston (10, 10', 10''), which rests against the inner wall (6) of the housing (1) by means of a ring (16) axially immovable relative to the piston and which is provided with a device for the pneumatic damping of a relative movement between the piston rod (4, 4', 4'') and the housing (1), _characterized in that_ the piston (10, 10', 10'') is joined to the piston rod (4, 4', 4'') in an axially immovable manner and that the ring is formed by a friction damping liner of foamed plastic material, which, at least in its friction face (17) resting against the inner wall (6), is open-celled and impregnated with lubricant.

2. A gas spring according to claim 1, _characterized in that_ the inner wall (6) of the housing (1) is at least partly enlarged over part of the length of the housing.

3. A gas spring according to claim 2, _characterized in that_ the inner wall (6) of the housing (1) has indentations (33) extending over part of the length of the housing (1).

4. A gas spring according to anyone of the claims 1 to 3, _characterized in that_, for retaining an object to be supported in one or several positions of rest, friction damping forces of between 30 and 120 N act between the friction damping liner (16) and the inner wall of the housing (1).

5. A gas spring according to anyone of the claims 1 to 4, in particular according to claim 4, _characterized in that_, under normal conditions (20°C), the gas spring has an extension force of 400 to 500 N.

## Revendications

1. Ressort à gaz constitué par un boîtier (1) sensiblement cylindrique, rempli de gaz sous pression et fermé de façon étanche à une extrémité, et une tige de piston (4, 4', 4'') concentrique à celui-ci et sortant de façon étanche par son autre extrémité, qui est munie à son extrémité se trouvant dans le boîtier (1) d'un piston (10, 10', 10'') qui s'applique au moyen d'un anneau (16) ne pouvant pas se déplacer axialement par rapport au piston contre la paroi interne (6) du boîtier (1) et qui est muni d'un dispositif d'amortissement pneumatique à mouvement relatif entre la tige de piston (4, 4', 4'') et le boîtier (1), caractérisé en ce que le piston (10, 10', 10'') est relié à la tige de piston (4, 4', 4'') de façon immobile en direction axiale et en ce que l'anneau est constitué par un garniture d'amortissement par frottement réalisée en une matière synthétique cellulaire, à cellules ouvertes au moins sur sa surface de frottement (17) qui s'applique contre la paroi interne (6) et qui est imprégnée d'un produit de lubrification.

2. Ressort à gaz selon la revendication 1, caractérisé en ce que la paroi interne (6) du boîtier (1) est élargie, au moins en partie, sur une partie de la longueur du boîtier (1).

3. Ressort à gaz selon la revendication 2, caractérisé en ce que la paroi interne (6) du boîtier (1) présente des creusures (33) s'étendant sur une partie de la longueur du boîtier (1).

4. Ressort à gaz selon l'une quelconque des revendications 1 à 3, caractérisé en ce que pour maintenir un objet à supporter dans une ou plusieurs positions de repos, des forces d'amortissement par frottement comprises entre 30 et 120 N agissent entre la garniture d'amortissement par frottement (16) et la paroi interne (6) du boîtier (1).

5. Ressort à gaz selon l'une quelconque des revendications 1 à 4, et en particulier la revendication 4, caractérisé en ce que le ressort à gaz présente dans des conditions normales (20° Celsius) une force de poussée en sortie comprise entre 400 et 500 N.

# FIG.1

# FIG.2

EP 0 211 281 B1

FIG. 3

3

# FIG. 4